# EUROPEAN PATENT SPECIFICATION

(11) **EP 3 444 525 B1**
(45) Date of publication and mention of the grant of the patent: **07.10.2020**
(21) Application number: 17782282.2
(22) Date of filing: 05.04.2017
(51) Int. Cl.: F21V 29/503, F21V 29/70, F21Y 115/30, F21S 41/39, F21S 41/675, F21S 41/16, B60Q 1/068

(54) **LIGHT EMITTING UNIT AND VEHICLE LAMP FITTING**
LICHTEMITTIERENDE EINHEIT UND FAHRZEUGLAMPENFASSUNG
UNITÉ ÉMETTRICE DE LUMIÈRE ET ACCESSOIRE DE LAMPE DE VÉHICULE

(30) Priority: 13.04.2016 JP 2016080337; 22.04.2016 JP 2016085829
(43) Date of publication of application: 20.02.2019
(73) Proprietor: Koito Manufacturing Co., Ltd., Tokyo 108-8711 (JP)
(72) Inventor: SATO, Ryuho, Shizuoka-shi Shizuoka 424-8764 (JP)
(74) Representative: Algemeen Octrooi- en Merkenbureau B.V.
(86) International application number: PCT/JP2017/014175
(87) International publication number: WO 2017/179465

(56) References cited:
- EP-A2- 2 518 393
- JP-A- 2008 108 613
- JP-A- 2008 108 613
- JP-A- 2010 165 536
- JP-A- 2015 525 952
- US-A1- 2015 204 503

## Description

### [TECHNICAL FIELD]

The present invention relates to a light-emitting unit according to claim 1 and a vehicle lamp comprising such light-emitting unit according to claim 6.

### [BACKGROUND ART]

To date, light source units provided with semiconductor laser light sources and for use in vehicle headlamps have been conceived (see, for example, patent document 1).
[patent document 1] JP2013-38010
[patent document 2] JP2008-108613
[patent document 3] US2015/204503 discloses a light-emitting device for a motor vehicle exhibiting the features of the preamble of claim 1.

### [PROBLEM TO BE SOLVED BY THE INVENTION]

The position of an optical axis in an actual product may differ from the position according to the design within a range of various tolerances, such as an accuracy of assembling optical components. Such a positional deviation of an optical axis is very small but, in a strict sense, leads to an error in the irradiation position of the light from the vehicle lamp. A semiconductor laser light source has a high luminance and can illuminate a far place, and thus a slight deviation of the optical axis can result in a relatively large error in the irradiation position. It is desired that the optical axis be as highly accurate as possible also in light sources provided with other semiconductor light-emitting elements.

The present invention has been made to address such a situation and is directed to providing a light-emitting unit with an accuracy-improved optical axis and a vehicle lamp provided with such a light-emitting unit.

### [MEANS TO SOLVE THE PROBLEM]

To solve the problem described above, a light-emitting unit according to an aspect of the present invention includes a light source including a semiconductor light-emitting element, a light source base that supports the light source, a heat-dissipating member to which the light source base is attached, and an optical member. The light source base includes an optical member positioning structure that positions the optical member relative to the light source.

A light-emitting unit according to the present invention includes a light source exhibiting the characterizing features of claim 1.

According to this aspect, the light source supporting member is provided with the optical member tilting mechanism. Therefore, a positional deviation of an optical axis can be corrected by tilting the optical member relative to the light source with the use of the optical member tilting mechanism after the light-emitting unit is attached to a predetermined location. Accordingly, the accuracy of the optical axis of the light-emitting unit can be improved.

The optical member tilting mechanism may be configured to allow the optical member to tilt about a first axis of tilt relative to the light source and to allow the optical member to tilt about a second axis of tilt relative to the light source, the first axis of tilt may be an optical axis of the light source, and the second axis of tilt may be orthogonal to the optical axis and located at a height of a light-exit surface of the light source.

The positioning structure may include a leading end surface located at a first height in an optical axis direction, and a light-exit surface of the light source may be located at a second height higher than the first height in the optical axis direction.

The light source supporting member may include a light source base that supports the light source, and a heat-dissipating member to which the light source base is attached or that is formed integrally with the light source base.

The positioning structure may include a positioning pin provided with a slit.

A vehicle lamp may include the light-emitting unit described above.

### [ADVANTAGE OF THE PRESENT INVENTION]

According to the present invention, a light-emitting unit with an accuracy-improved optical axis and a vehicle lamp provided with such a light-emitting unit can be provided.

### [BRIEF DESCRIPTION OF THE DRAWINGS]

Fig. 1 schematically illustrates an inner structure of a vehicle lamp according to a first embodiment;
Fig. 2 schematically illustrates an inner structure of a laser light source according to the first embodiment;
Fig. 3 is a perspective view schematically illustrating an appearance of a light-emitting unit according to the first embodiment;
Fig. 4 is a perspective view schematically illustrating an appearance of a light source base and a reflector according to the first embodiment;
Fig. 5 is a perspective view schematically illustrating an appearance of the laser light source and the light source base according to the first embodiment;
Fig. 6A is a schematic top view of the laser light source and the light source base according to the first embodiment, and Fig. 6B is a schematic front view of the laser light source and the light source base according to the first embodiment;
Fig. 7 is a schematic bottom view of the reflector according to the first embodiment;
Fig. 8 is a schematic front view of the light source base and the reflector according to the first embodiment;
Fig. 9 is a sectional view along the A-A line indicated in Fig. 8;
Fig. 10 schematically illustrates an inner structure of a vehicle lamp according to a second embodiment;
Fig. 11 schematically illustrates an inner structure of a laser light source according to the second embodiment;
Fig. 12 is a perspective view schematically illustrating an appearance of a light-emitting unit according to the second embodiment;
Fig. 13 is a schematic exploded perspective view of the light-emitting unit illustrated in Fig. 12;
Fig. 14 is a schematic sectional view of the light-emitting unit illustrated in Fig. 12;
Fig. 15 illustrates another light source that can be employed in a light-emitting unit; and
Fig. 16A is a schematic perspective view illustrating a first positioning pin provided with slits, and Fig. 16B illustrates transport of the laser light source.

### [MODE FOR CARRYING OUT THE INVENTION]

Hereinafter, the present invention will be described on the basis of exemplary embodiments with reference to the drawings. The embodiments are illustrative in nature and are not intended to limit the invention. Not all the features and combinations thereof described in the embodiments are necessarily essential to the invention. Identical or equivalent constituent elements, members, and processes illustrated in the drawings are given identical reference characters, and duplicate descriptions thereof will be omitted as appropriate. The scales and the shapes of the components illustrated in the drawings are set merely for convenience to facilitate the descriptions and are not to be interpreted as limiting the invention, unless specifically indicated otherwise.

### (First Embodiment)

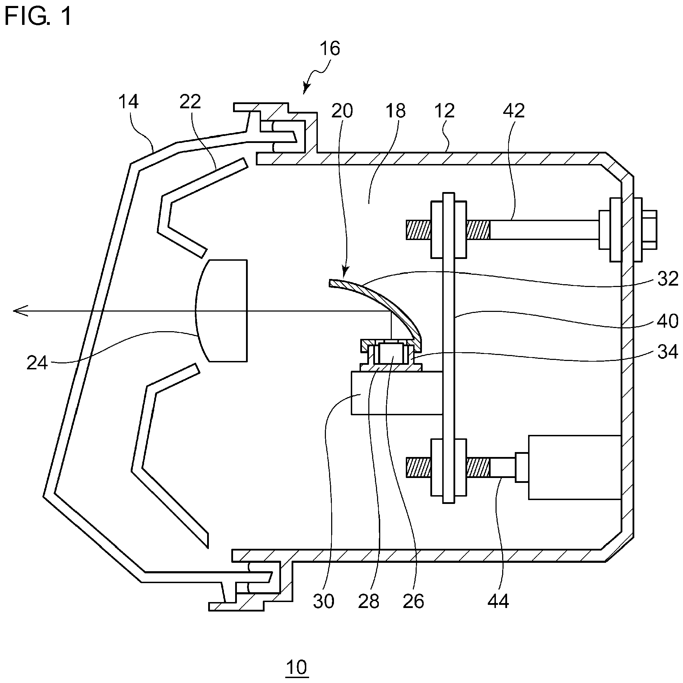

Fig. 1 schematically illustrates an inner structure of a vehicle lamp 10 according to an embodiment. The vehicle lamp 10 is a left-side vehicle headlamp provided in the left end portion of the front end portion of a vehicle body. A right-side vehicle headlamp having a shape that is a mirror image of the vehicle lamp 10 is disposed in the right end portion of the front end portion of the vehicle body. The left-side vehicle headlamp and the right-side vehicle headlamp have similar structures, and thus the left-side vehicle headlamp will be described as an example, hereinafter.

The vehicle lamp 10 includes a lamp body 12 having a recess portion that opens frontward and a light-transmissive cover 14 that closes the opening in the lamp body 12. The lamp body 12 and the cover 14 constitute a lamp housing 16. The inner space of the lamp housing 16 serves as a lamp room 18.

A light-emitting unit 20, an extension 22, and an optical member 24 are disposed in the lamp room 18. The optical member 24 is provided to condense or focus the light emitted from the light-emitting unit 20. The optical member 24 is, for example, a convex lens, a projection lens, a condenser lens, a light guide, a cylindrical lens, or the like.

The light-emitting unit 20 includes a laser light source 26, a light source base 28 that supports the laser light source 26, a heat-dissipating member (hereinafter, also referred to as a heat sink) 30 to which the light source base 28 is attached, and a reflector 32 that reflects the light from the laser light source 26 toward the front of the lamp. A positioning structure 34 is provided in the light source base 28 for positioning the reflector 32 relative to the laser light source 26. The light-emitting unit 20 and the positioning structure 34 will be described later in detail.

The heat sink 30 is attached to a metal support member 40 at a substantially middle portion thereof. A first aiming screw 42 is attached to an upper portion of the metal support member 40, and a second aiming screw 44 is attached to a lower portion of the metal support member 40. The metal support member 40 is supported by the first aiming screw 42 and the second aiming screw 44 so as to be tiltable relative to the lamp body 12. Then, rotating the first aiming screw 42 and/or the second aiming screw 44 causes the metal support member 40 to tilt, and the light-emitting unit 20 is tilted along therewith to adjust the optical axis of the illumination light (aiming adjustment).

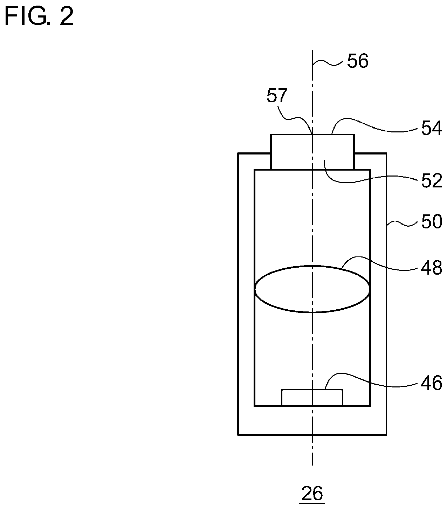

Fig. 2 schematically illustrates an inner structure of the laser light source 26 according to the embodiment. The laser light source 26 includes a laser diode 46, which is a type of semiconductor light-emitting element; a condenser lens 48 that condenses the light emitted from the laser diode 46; a housing 50 that houses the laser diode 46 and the condenser lens 48; and an optical wavelength conversion unit 52 provided in a penetrating portion formed in an upper portion of the housing 50. The laser diode 46 is provided on a bottom portion of the housing 50. One or more blue LDs, for example, are arrayed in the laser diode 46. A transparent sealing member having yellow phosphor dispersed therein, plate-shaped yellow phosphor ceramics, or the like is used as the optical wavelength conversion unit 52, for example. An upper surface of the optical wavelength conversion unit 52 serves as a light-exit surface 54 of the laser light source 26.

An optical axis 56 of the laser light source 26 extends in a direction along which the emission light of the laser light source 26 is most intense. In addition, the optical axis 56 passes through the center of the light-exit surface 54 and is perpendicular to the light-exit surface 54. In the present specification, for convenience of description, the center of the light-exit surface 54 is also referred to as a light source center 57.

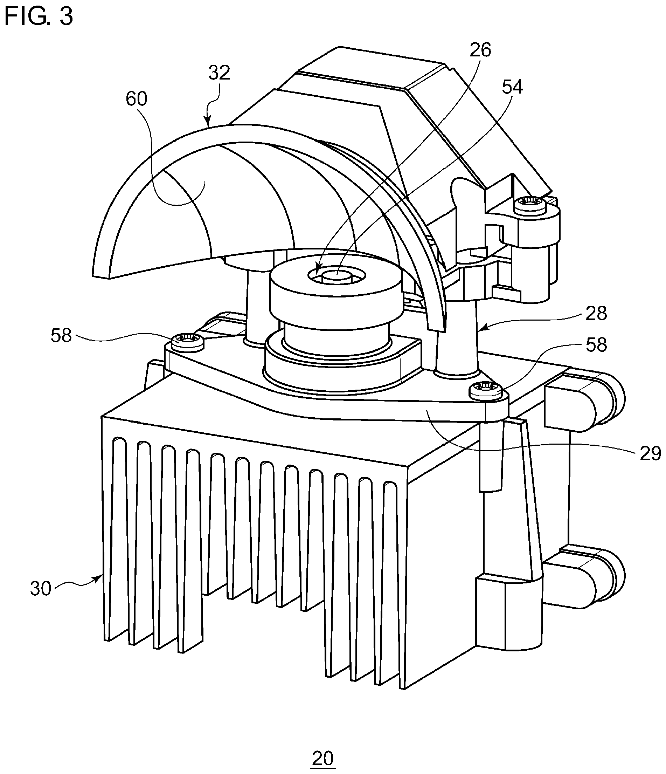

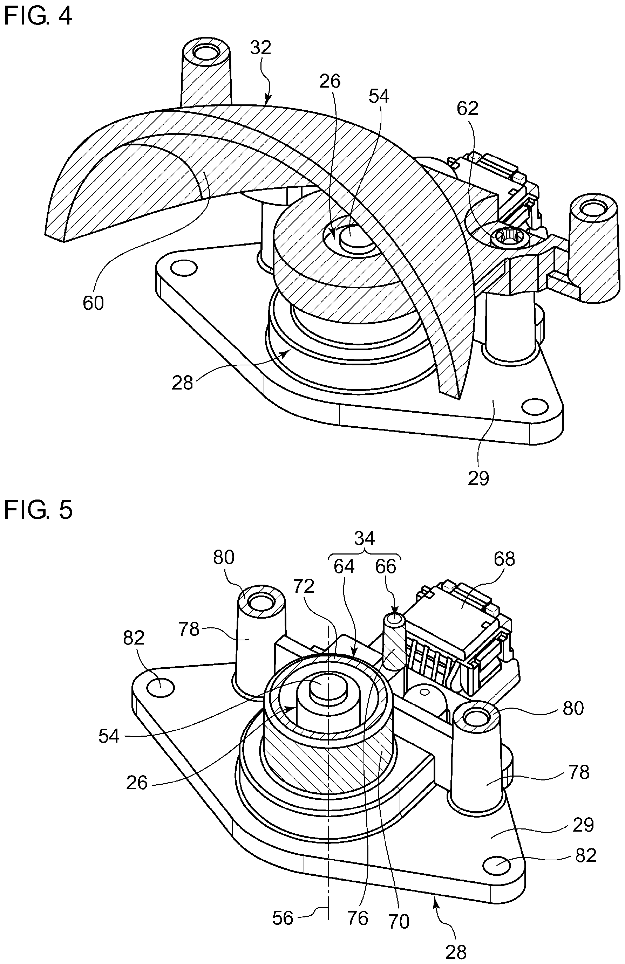

Fig. 3 is a perspective view schematically illustrating an appearance of the light-emitting unit 20 according to the embodiment. Fig. 4 is a perspective view schematically illustrating an appearance of the light source base 28 and the reflector 32 according to the embodiment. To facilitate understanding, the reflector 32 is hatched in Fig. 4.

The light source base 28 is directly attached to the heat sink 30 with a bottom plate 29 of the light source base 28 abutting an upper surface of the heat sink 30. In the illustrated example, the light source base 28 is attached to the heat sink 30 with the use of light source base attaching screws 58, but any other attaching unit may be used.

The reflector 32 has a reflective surface 60 and is disposed outside the laser light source 26 (above the laser light source 26 in the drawings) to receive the light from the light-exit surface 54 with the reflective surface 60. The reflective surface 60 opposes the light-exit surface 54. The reflector 32 is directly attached to the light source base 28. In the illustrated example, the reflector 32 is attached to the light source base 28 with the use of reflector attaching screws 62, but any other attaching unit may be used.

A fan (not illustrated) may be attached to a bottom portion of the heat sink 30.

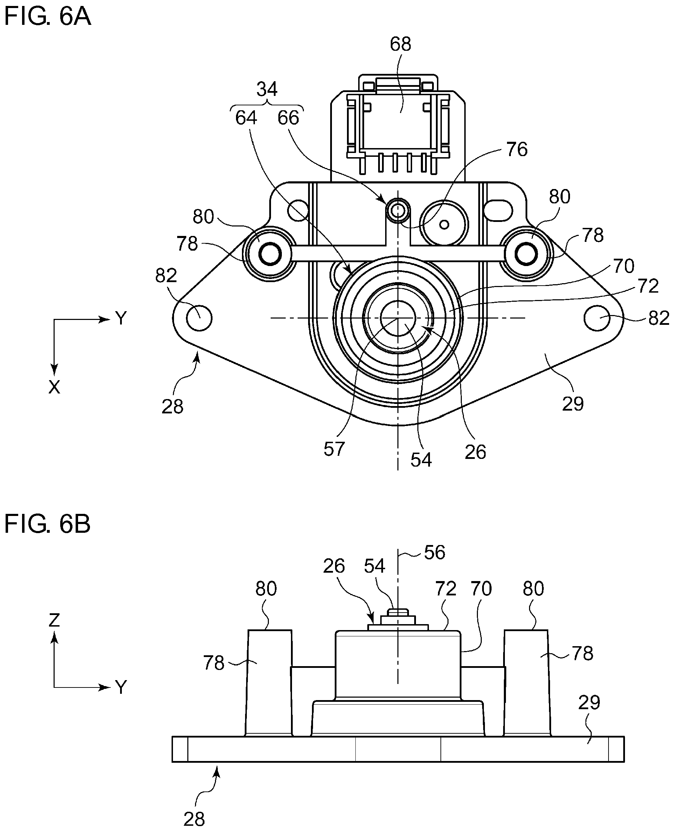

Fig. 5 is a perspective view schematically illustrating an appearance of the laser light source 26 and the light source base 28 according to the embodiment. To facilitate understanding, positioning surfaces are hatched in Fig. 5. Fig. 6A is a schematic top view of the laser light source 26 and the light source base 28 according to the embodiment, and Fig. 6B is a schematic front view of the laser light source 26 and the light source base 28 according to the embodiment. As illustrated in Fig. 6A and Fig. 6B, an orthogonal coordinate system with the origin lying at the light source center 57 is considered for convenience of description below. In other words, the front-back direction and the right-left direction of the lamp extend along the X-axis and the Y-axis, respectively, and the optical axis direction extends along the Z-axis. The light emitted from the laser light source 26 is deflected by the reflector 32 toward the front in the X-direction. In Fig. 6A, a hole into which a feeder terminal of the laser light source 26 is inserted is omitted for convenience.

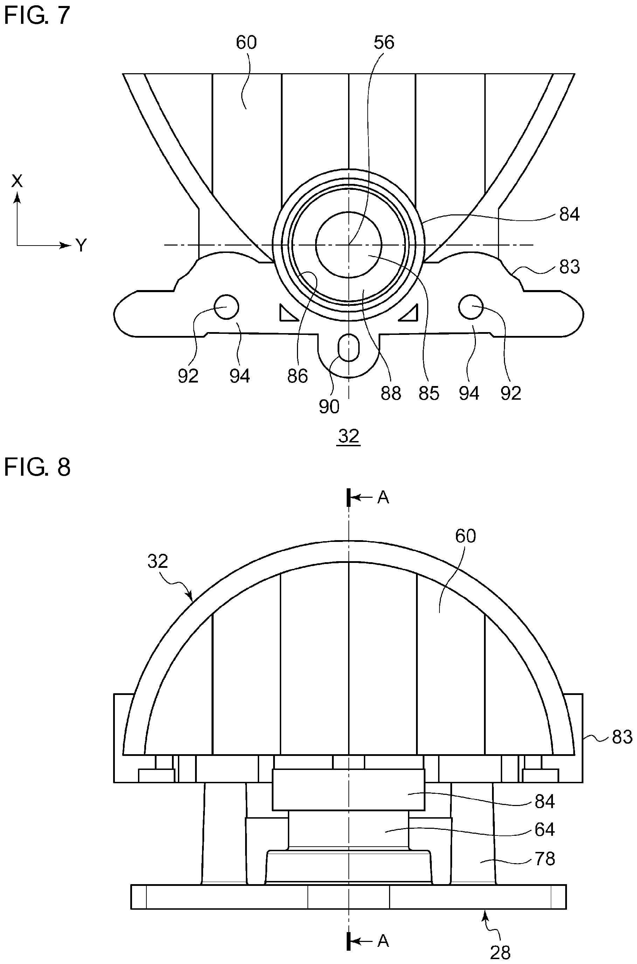

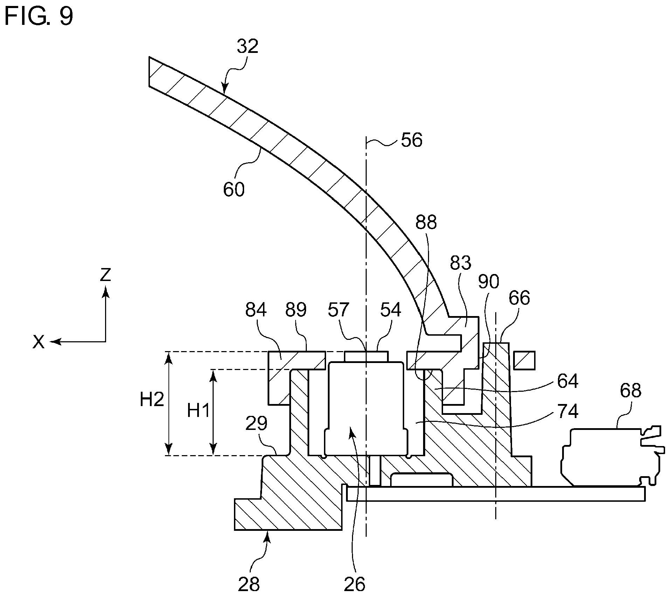

Fig. 7 is a schematic bottom view of the reflector 32 according to the embodiment. Fig. 8 is a schematic front view of the light source base 28 and the reflector 32 according to the embodiment. Fig. 9 is a sectional view along the A-A line indicated in Fig. 8.

The positioning structure 34 in the light source base 28 includes a cylindrical first positioning pin 64 and a columnar second positioning pin 66. The first positioning pin 64 and the second positioning pin 66 are erected on the bottom plate 29 of the light source base 28 and formed integrally with the light source base 28. The light source base 28 is formed substantially symmetric with respect to the X-axis.

The light source base 28 is a member that holds the laser light source 26 while allowing power to be fed thereto. A feeder substrate 68 for feeding power to the laser light source 26 is installed on the light source base 28.

The center of the first positioning pin 64 coincides with the optical axis 56. The position of the center of the second positioning pin 66 in the Y-direction coincides with the position of the center of the first positioning pin 64 in the Y-direction. In other words, the center of the first positioning pin 64 and the center of the second positioning pin 66 both lie on the X-axis. The second positioning pin 66 is disposed more backward than the first positioning pin 64 in the X-direction.

The first positioning pin 64 defines a first positioning side surface 70 centered at the optical axis 56. The first positioning side surface 70 is an outer peripheral surface of the first positioning pin 64. The first positioning side surface 70 is used to position the reflector 32 relative to the laser light source 26 in the direction of rotation about the optical axis 56.

The first positioning pin 64 also defines a first positioning end surface 72. The first positioning end surface 72 is an upper surface of the first positioning pin 64 (i.e., the leading end surface in the optical axis direction). The first positioning end surface 72 is used to position the reflector 32 relative to the laser light source 26 in the optical axis direction.

As illustrated in Fig. 9, the first positioning end surface 72 is at a first height H1 from the bottom plate 29 of the light source base 28 in the optical axis direction. The light-exit surface 54 is at a second height H2 from the bottom plate 29 of the light source base 28 in the optical axis direction. The second height H2 is higher than the first height H1. In this manner, the light-exit surface 54 is located higher than the first positioning end surface 72.

A light source mounting recess portion 74 is formed in the first positioning pin 64 for mounting the laser light source 26 therein. A large portion of the laser light source 26 is housed in the light source mounting recess portion 74 except for the light-exit surface 54 and the vicinity thereof. The light source mounting recess portion 74 has a larger diameter than the laser light source 26, and a space is present between the inner peripheral surface of the first positioning pin 64 and the outer peripheral surface of the laser light source 26. In this manner, the first positioning pin 64 is formed to enclose the laser light source 26.

Referring again to Fig. 5, Fig. 6A, and Fig. 6B, the second positioning pin 66 defines a second positioning side surface 76. The second positioning side surface 76 is an outer peripheral surface of the second positioning pin 66. The second positioning side surface 76 is used to position the reflector 32 relative to the laser light source 26 in the direction of rotation about the optical axis 56. The outer diameter of the second positioning pin 66 is smaller than the outer diameter of the first positioning pin 64.

The light source base 28 includes two reflector attaching screw hole portions 78. The two reflector attaching screw hole portions 78 are disposed on respective sides across the X-axis. The reflector attaching screw hole portions 78 are each erected in a columnar shape on the bottom plate 29 of the light source base 28 and formed integrally with the light source base 28. A screw hole for the reflector attaching screw 62 (see Fig. 4) is formed at the center of each reflector attaching screw hole portion 78.

The reflector attaching screw hole portions 78 each define a second positioning end surface 80. The second positioning end surfaces 80 are upper surfaces of the respective reflector attaching screw hole portions 78. The second positioning end surfaces 80 are used to position the reflector 32 relative to the laser light source 26 in the optical axis direction. As such, the second positioning end surfaces 80 are a part of the positioning structure 34. The second positioning end surfaces 80 are located at the same heightwise position as the first positioning end surface 72 in the optical axis direction.

Two heat sink attaching screw holes 82 are formed in the bottom plate 29 of the light source base 28. The two heat sink attaching screw holes 82 are disposed on respective sides across the X-axis. The heat sink attaching screw holes 82 are provided more outward than the reflector attaching screw hole portions 78 in the X-direction. The light source base attaching screws 58 (see Fig. 3) are inserted into the heat sink attaching screw holes 82.

As illustrated in Fig. 7 to Fig. 9, the reflector 32 includes an engagement portion 84 that engages with the first positioning pin 64. The engagement portion 84 is a circular portion having an opening 85 through which the optical axis 56 passes. In other words, the light emitted from the light-exit surface 54 passes through the opening 85 and travels toward the reflective surface 60 of the reflector 32. An upper surface 89 of the engagement portion 84 is located at the same heightwise position as the light-exit surface 54 in the optical axis direction.

The engagement portion 84 defines a first positioning hole 86 corresponding to the first positioning side surface 70 of the first positioning pin 64. The first positioning hole 86 is an inner peripheral surface of the engagement portion 84. The engagement portion 84 also defines a first abutment surface 88 that abuts the first positioning end surface 72 of the first positioning pin 64. The first abutment surface 88 is a region between the opening 85 and the first positioning hole 86.

The reflector 32 includes a reflector base portion 83 for supporting the reflector 32. The engagement portion 84 is a part of the reflector base portion 83. The reflector base portion 83 is coupled to the reflective surface 60 of the reflector 32 at a position backward in the X-direction. When the engagement portion 84 is disposed to cover the first positioning pin 64, the reflector base portion 83 can support the reflective surface 60 of the reflector 32 above the laser light source 26.

The reflector base portion 83 includes a second positioning hole 90 that engages with the second positioning pin 66. The second positioning hole 90 is a long hole that can accept the second positioning pin 66 thereinto and is elongated in the X-direction.

Attaching screw holes 92 are formed in the reflector base portion 83 to correspond to the reflector attaching screw hole portions 78 in the light source base 28. The reflector base portion 83 defines second abutment surfaces 94 that abut the second positioning end surfaces 80 around the respective attaching screw holes 92.

As the first positioning hole 86 and the second positioning hole 90 engage with the first positioning pin 64 and the second positioning pin 66, respectively, the light source base 28 can position the reflector 32 relative to the laser light source 26 in the direction of rotation about the optical axis 56.

As the first abutment surface 88 and the second abutment surfaces 94 abut the first positioning end surface 72 and the second positioning end surfaces 80, respectively, the light source base 28 can position the reflector 32 relative to the laser light source 26 in the optical axis direction.

As described thus far, the positioning structure 34 that positions the reflector 32 relative to the laser light source 26 is provided in the light source base 28. In other words, the laser light source 26 and the reflector 32 are both supported on the light source base 28. The light source base 28 is attached to the heat sink 30. Therefore, the reflector 32 is directly fixed to the light source base 28 without the heat sink 30 interposed therebetween.

In evaluating the accuracy of the optical axis of the light-emitting unit 20, an accumulation of dimensional tolerances is considered with the light source center 57 serving as a start point and the diameter of the first positioning hole 86 in the reflector 32 serving as an end point. The result of this accumulation reflects a variation in the accuracy of assembling the optical components in the light-emitting unit 20, namely, the accuracy of the optical axis. Since the reflector 32 is directly fixed to the light source base 28, the result of the accumulation of the dimensional tolerances can be kept relatively small. Accordingly, the light-emitting unit 20 with an accuracy-improved optical axis and the vehicle lamp 10 provided with such a light-emitting unit 20 can be provided.

In contrast, in a typical light-emitting unit, a light source base and a reflector are each attached to a heat sink. In this case, the reflector is attached to the light source base with the heat sink interposed therebetween. When an accumulation of dimensional tolerances is considered in a similar manner with a light source center serving as a start point and the diameter of a positioning hole in the reflector serving as an end point, the result of the accumulation of the dimensional tolerances becomes relatively large in this typical configuration since the heat sink is interposed therebetween.

Furthermore, the first positioning pin 64 defines the first positioning side surface 70 centered at the optical axis 56 of the laser light source 26. In other words, the center of the first positioning pin 64 coincides with the light source center 57. This design makes it possible to omit a dimensional tolerance between the center of the first positioning pin 64 and the light source center 57 in the accumulation, and the accuracy of the optical axis can thus be improved. In addition, the center of the second positioning pin 66 coincides with the light source center 57 in the X-direction. This also helps to improve the accuracy of the optical axis.

The first positioning pin 64 defines the light source mounting recess portion 74 for mounting the laser light source 26 therein, and the first positioning side surface 70 is the outer peripheral surface of the first positioning pin 64. This configuration makes it possible to dispose the laser light source 26 and the first positioning pin 64 coaxially and to house the laser light source 26 in the light source mounting recess portion 74. Thus, the size of the light source base 28 can be reduced.

The first positioning pin 64 includes the first positioning end surface 72 located at the first height H1 in the optical axis direction, and the light-exit surface 54 is located at the second height H2 that is higher than the first height H1 in the optical axis direction. In this manner, the height of the leading end surface of the first positioning pin 64 in the optical axis direction is lower than the light-exit surface 54 of the laser light source 26. Thus, the upper surface 89 of the engagement portion 84 of the reflector 32 can be disposed at the same height as the light-exit surface 54. Alternatively, the upper surface 89 of the engagement portion 84 of the reflector 32 can be disposed at a position lower than the height of the light-exit surface 54. Accordingly, the engagement portion 84 does not block the light emitted from the light-exit surface 54 toward the reflector 32.

### (Second Embodiment)

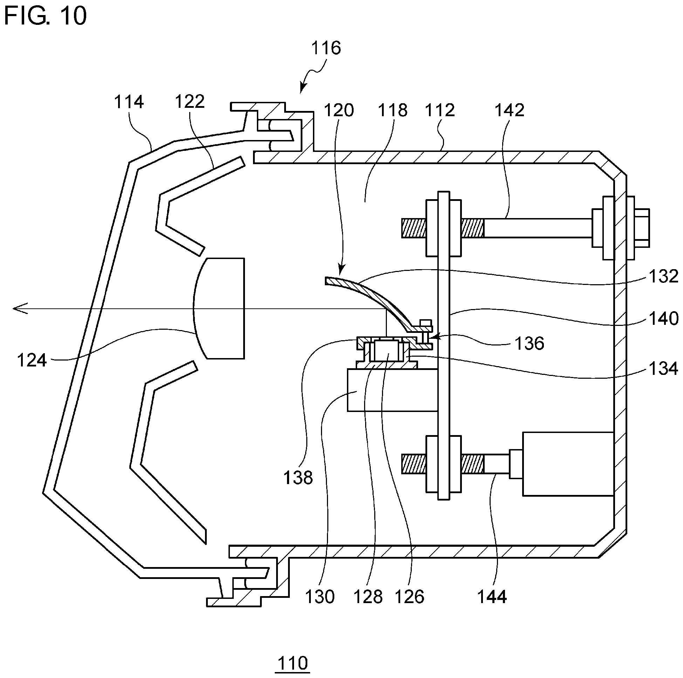

Fig. 10 schematically illustrates an inner structure of a vehicle lamp 110 according to an embodiment. The vehicle lamp 110 is a left-side vehicle headlamp provided in the left end portion of the front end portion of a vehicle body. A right-side vehicle headlamp having a shape that is a mirror image of the vehicle lamp 110 is disposed in the right end portion of the front end portion of the vehicle body. The left-side vehicle headlamp and the right-side vehicle headlamp have similar structures, and thus the left-side vehicle headlamp will be described as an example, hereinafter.

The vehicle lamp 110 includes a lamp body 112 having a recess portion that opens frontward and a light-transmissive cover 114 that closes the opening in the lamp body 112. The lamp body 112 and the cover 114 constitute a lamp housing 116. The inner space of the lamp housing 116 serves as a lamp room 118.

A light-emitting unit 120, an extension 122, and an optical member 124 are disposed in the lamp room 118. The optical member 124 is provided to condense or focus the light emitted from the light-emitting unit 120. The optical member 124 is, for example, a convex lens, a projection lens, a condenser lens, a light guide, a cylindrical lens, or the like.

The light-emitting unit 120 includes a laser light source 126, a light source base 128 that supports the laser light source 126, a heat-dissipating member (hereinafter, also referred to as a heat sink) 130 to which the light source base 128 is attached, and a reflector 132 that reflects the light from the laser light source 126 toward the front of the lamp.

A positioning structure 134 is provided in the light source base 128 for positioning the reflector 132 relative to the laser light source 126. The light-emitting unit 120 includes a reflector tilting mechanism 136 provided on the light source base 128 for allowing the reflector 132 to tilt about each of two different axes relative to the laser light source 126. The reflector 132 is attached to the light source base 128 and the heat sink 130 with the reflector tilting mechanism 136 interposed therebetween. The positioning structure 134 is also a part of the reflector tilting mechanism 136. The light-emitting unit 120, the positioning structure 134, and the reflector tilting mechanism 136 will be described later in detail.

The heat sink 130 is attached to a light-emitting unit supporting member 140 at a substantially middle portion thereof. The light-emitting unit supporting member 140 may be, for example, a metal bracket. A first aiming screw 142 is attached to an upper portion of the light-emitting unit supporting member 140, and a second aiming screw 144 is attached to a lower portion of the light-emitting unit supporting member 140. The light-emitting unit supporting member 140 is supported by the first aiming screw 142 and the second aiming screw 144 so as to be tiltable relative to the lamp body 112. Then, rotating the first aiming screw 142 and/or the second aiming screw 144 causes the light-emitting unit supporting member 140 to tilt, and the light-emitting unit 120 is tilted along therewith to adjust the optical axis of the illumination light (aiming adjustment).

The vehicle lamp 110 may be provided with a plurality of light-emitting units 120. Heat sinks 130 in the respective light-emitting units 120 may be attached to a common light-emitting unit supporting member 140. In this case, the optical axis of one light-emitting unit 120 can be adjusted relative to another light-emitting unit 120 with the use of the reflector tilting mechanism 136 of the one light-emitting unit 120.

The laser light source 126 is suitable for illuminating a far place, and thus the light-emitting unit 120 may be provided to form a high-beam light-distribution pattern. The vehicle lamp 110 may further be provided with another light-emitting unit for forming a low-beam light-distribution pattern. The reflector tilting mechanism 136 may be used to adjust the optical axis of the light-emitting unit 120 relative to the other light-emitting unit. For example, the optical axis of the light-emitting unit 120 may be adjusted relative to an elbow point in the low-beam light-distribution pattern.

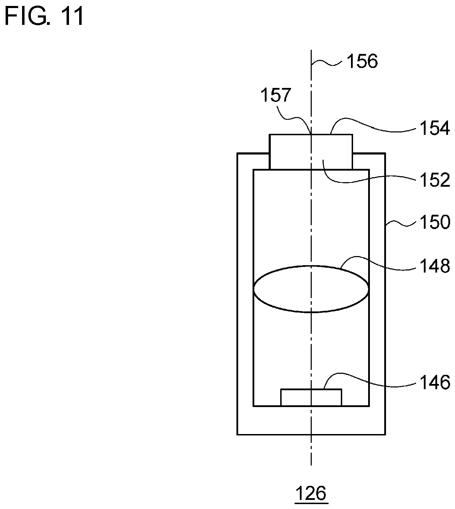

Fig. 11 schematically illustrates an inner structure of the laser light source 126 according to the embodiment. The laser light source 126 includes a laser diode 146, which is a type of semiconductor light-emitting element; a condenser lens 148 that condenses the light emitted from the laser diode 146; a housing 150 that houses the laser diode 146 and the condenser lens 148; and an optical wavelength conversion unit 152 provided in a penetrating portion formed in an upper portion of the housing 150. The laser diode 146 is provided on a bottom portion of the housing 150. One or more blue LDs, for example, are arrayed in the laser diode 146. A transparent sealing member having yellow phosphor dispersed therein, plate-shaped yellow phosphor ceramics, or the like is used as the optical wavelength conversion unit 152, for example. An upper surface of the optical wavelength conversion unit 152 serves as a light-exit surface 154 of the laser light source 126.

An optical axis 156 of the laser light source 126 extends in a direction along which the emission light of the laser light source 126 is most intense. In addition, the optical axis 156 passes through the center of the light-exit surface 154 and is perpendicular to the light-exit surface 154. In the present specification, for convenience of description, the center of the light-exit surface 154 is also referred to as a light source center 157.

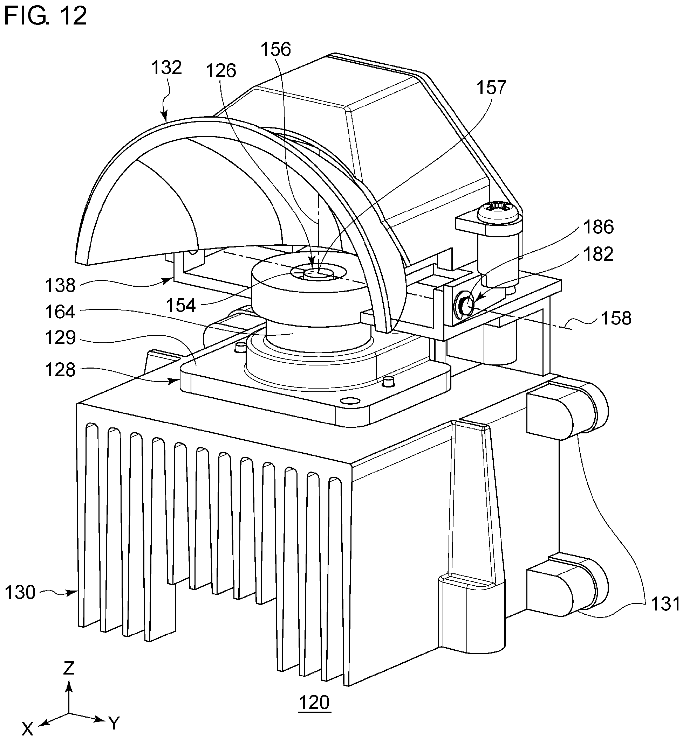

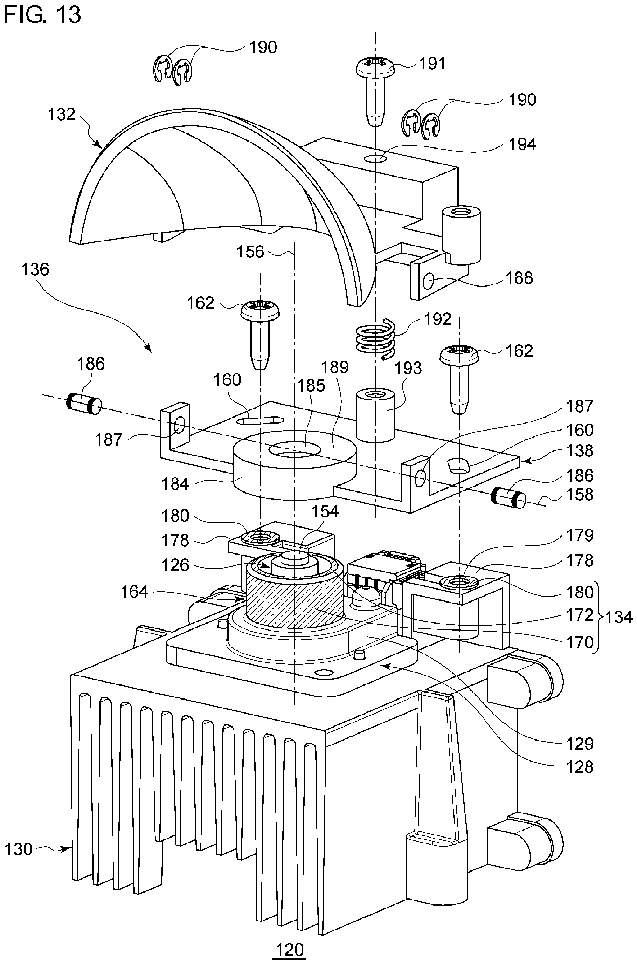

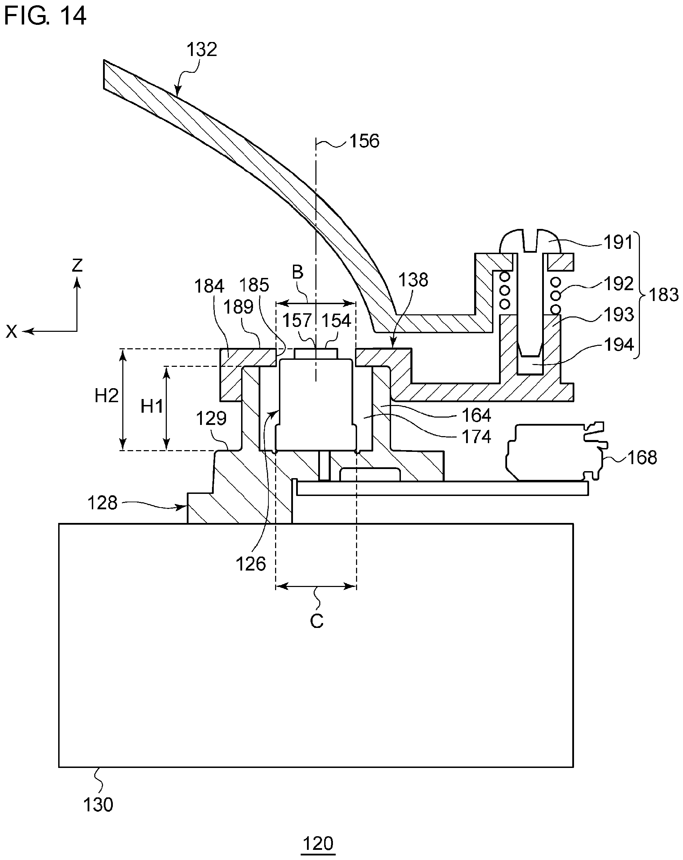

Fig. 12 is a perspective view schematically illustrating an appearance of the light-emitting unit 120 according to the embodiment. Fig. 13 is a schematic exploded perspective view of the light-emitting unit 120 illustrated in Fig. 12. To facilitate understanding, positioning surfaces are hatched in Fig. 13. Fig. 14 is a schematic sectional view of the light-emitting unit 120 illustrated in Fig. 12. An orthogonal coordinate system with the origin on the light source center 157 is considered for convenience of description below. In other words, the front-back direction and the right-left direction of the lamp extend along the X-axis and the Y-axis, respectively, and the optical axis direction extends along the Z-axis. The light emitted from the laser light source 126 is deflected by the reflector 132 toward the front in the X-direction. A section along an XZ-plane is illustrated in Fig. 14.

The reflector tilting mechanism 136 is configured to allow the reflector 132 to tilt about a first axis of tilt relative to the laser light source 126 and to allow the reflector 132 to tilt about a second axis of tilt 158 relative to the laser light source 126. Herein, the first axis of tilt is the optical axis 156 of the laser light source 126. The second axis of tilt 158 is orthogonal to the optical axis 156 and is located at the height of the light-exit surface 154 of the laser light source 126. The first axis of tilt and the second axis of tilt 158 correspond to the Z-axis and the Y-axis, respectively, and pass through the light source center 157.

The light source base 128 is directly attached to the heat sink 130 with a bottom plate 129 of the light source base 128 abutting an upper surface of the heat sink 130. The light source base 128 is attached to the heat sink 130 with a screw or any other attaching unit. The light source base 128 and the heat sink 130 are formed substantially symmetric with respect to the X-axis. The heat sink 130 includes boss portions 131 provided at portions toward the back surface in the X-direction, and the boss portions 131 are for fixing the heat sink 130 to a fixing location, such as the light-emitting unit supporting member 140, for example. A fan (not illustrated) may be attached to a bottom portion of the heat sink 130.

The positioning structure 134 in the light source base 128 includes a cylindrical positioning pin 164 having a center coinciding with the optical axis 156. The positioning pin 164 is erected on the bottom plate 129 of the light source base 128 and formed integrally with the light source base 128.

The first positioning pin 164 defines a cylindrical positioning side surface 170 centered at the optical axis 156. The positioning side surface 170 is an outer peripheral surface of the positioning pin 164. The positioning side surface 170 is used to position the reflector 132 relative to the laser light source 126 in the direction of rotation about the optical axis 156.

The positioning pin 164 also defines a first positioning end surface 172. The first positioning end surface 172 is an upper surface of the positioning pin 164 (i.e., the leading end surface in the optical axis direction) and lies in a plane perpendicular to the optical axis 156. The first positioning end surface 172 is used to position the reflector 132 relative to the laser light source 126 in the optical axis direction.

As illustrated in Fig. 14, the first positioning end surface 172 is at a first height H1 from the bottom plate 129 of the light source base 128 in the optical axis direction. The light-exit surface 154 is at a second height H2 from the bottom plate 129 of the light source base 128 in the optical axis direction. The second height H2 is higher than the first height H1. In this manner, the light-exit surface 154 is located higher than the first positioning end surface 172.

A light source mounting recess portion 174 is formed in the positioning pin 164 for mounting the laser light source 126 therein. A large portion of the laser light source 126 is housed in the light source mounting recess portion 174 except for the light-exit surface 154 and the vicinity thereof. The light source mounting recess portion 174 has a larger diameter than the laser light source 126, and a space is present between the inner peripheral surface of the positioning pin 164 and the outer peripheral surface of the laser light source 126. In this manner, the positioning pin 164 is formed to enclose the laser light source 126. This configuration makes it possible to dispose the laser light source 126 and the positioning pin 164 coaxially and to house the laser light source 126 in the light source mounting recess portion 174. Thus, the size of the light source base 128 can be reduced.

The light source base 128 is a member that holds the laser light source 126 while allowing power to be fed thereto. A feeder substrate 168 for feeding power to the laser light source 126 is installed on the light source base 128.

As illustrated in Fig. 13, the heat sink 130 includes two reflector base attachment portions 178. The two reflector base attachment portions 178 are disposed on respective sides across the X-axis. The reflector base attachment portions 178 are disposed more backward than the positioning pin 164 in the X-direction.

The reflector base attachment portions 178 each define a second positioning end surface 180. The second positioning end surfaces 180 are each formed to enclose a screw hole 179 in the reflector base attachment portion 178. The second positioning end surfaces 180 are a part of upper surfaces of the respective reflector base attachment portions 178 and lie in a plane perpendicular to the optical axis 156. The second positioning end surfaces 180 are located at the same heightwise position as the first positioning end surface 172 in the optical axis direction. Since the reflector base attachment portions 178 are located more backward than the positioning pin 164 in the X-direction, the second positioning end surfaces 180 are located also more backward than the positioning pin 164 in the X-direction. The second positioning end surfaces 180 are used to position the reflector 132 relative to the laser light source 126 in the optical axis direction. As such, the second positioning end surfaces 180 are a part of the positioning structure 134.

The reflector tilting mechanism 136 includes a reflector base 138 for supporting the reflector 132. An engagement portion 184 having a circular lid shape is formed in the reflector base 138 at a front middle portion thereof in the X-direction, and the engagement portion 184 engages with the positioning pin 164. The reflector base 138 is a substantially rectangular plate member, and a front semicircular portion of the engagement portion 184 in the X-direction projects frontward from the plate member in the X-direction. An upper surface 189 of the engagement portion 184 is located at the same heightwise position as the light-exit surface 154 in the optical axis direction.

The engagement portion 184 has a cylindrical inner peripheral surface corresponding to the positioning side surface 170 of the positioning pin 164 and an annular planar surface corresponding to the first positioning end surface 172. The annular planar surface of the engagement portion 184 is a back surface opposite to the upper surface 189 of the engagement portion 184. When the engagement portion 184 is disposed to cover the positioning pin 164, the cylindrical inner peripheral surface and the annular planar surface of the engagement portion 184 make contact with the positioning end surface 170 and the first positioning end surfaces 172, respectively. In this contact state, the engagement portion 184 can rotate about the optical axis 156 relative to the positioning pin 164.

The reflector base 138 includes two arc-shaped groove portions 160 disposed to correspond to the respective reflector base attachment portions 178. The two arc-shaped groove portions 160 are formed along a single arc centered at the light source center 157. When the engagement portion 184 is disposed to cover the positioning pin 164, outer peripheral portions of the arc-shaped groove portions 160 make contact with the respective second positioning end surfaces 180 on a back surface of the reflector base 138, and the arc-shaped groove portions 160 communicate with the screw holes 179 in the respective reflector base attachment portions 178.

Rotating the engagement portion 184 about the optical axis 156 relative to the positioning pin 164 allows the reflector base 138 and the reflector 132 supported by the reflector base 138 to tilt about the optical axis 156 relative to the laser light source 126. In this manner, the reflector tilting mechanism 136 is provided on the light source base 128 to allow the reflector 132 to tilt about the optical axis 156 relative to the laser light source 126. Appropriately selecting an installation angle of the reflector 132 about the optical axis 156 relative to the laser light source 126 within an arc length of the arc-shaped groove portions 160 allows the optical axis of the light-emitting unit 120 to be adjusted in the Y-direction (i.e., the right-left direction of the lamp).

The reflector base 138 is positioned in the optical axis direction by the first positioning end surface 172 and the second positioning end surfaces 180.

As illustrated in Fig. 13, reflector base attaching screws 162 are inserted into the respective arc-shaped groove portions 160 from the upper surface side of the reflector base 138 and attached into the screw holes 179 in the reflector base attachment portions 178. In this manner, the reflector base 138 is fixed to the light source base 128 and the heat sink 130.

The number of the reflector base attachment portions 178 and of the arc-shaped groove portions 160 is not limited to two each. One each or three or more each of the reflector base attachment portions 178 and the arc-shaped groove portions 160 may be provided.

The engagement portion 184 includes an opening 185 through which the optical axis 156 passes. In other words, the light emitted from the light-exit surface 154 of the laser light source 126 passes through the opening 185 and travels toward the reflector 132. The light reflected by the reflector 132 is directed toward the front in the X-direction.

The opening 185 has a diameter B that is smaller than a diameter C of the laser light source 126. Thus, the laser light source 126 can be prevented from falling out of the light source mounting recess portion 174 through the opening 185.

The reflector base 138 supports the reflector 132, allowing the reflector 132 to tilt about the second axis of tilt 158. As such, the reflector tilting mechanism 136 includes two coupling portions 182 and an adjustment portion 183. The coupling portions 182 couple the reflector 132 to the reflector base 138, allowing the reflector 132 to tilt about the second axis of tilt 158. The adjustment portion 183 is configured to be capable of adjusting the gap between the reflector 132 and the reflector base 138.

The two coupling portions 182 are disposed on respective sides across the X-axis. The coupling portions 182 each include a shaft 186 that is disposed in the second axis of tilt 158 and extends along the second axis of tilt 158, and the coupling portions 182 are therefore located at respective sides of the engagement portion 184. The shafts 186 are each inserted in a first shaft insertion hole 187 in the reflector base 138 and a second shaft insertion hole 188 in the reflector 132. A pair of E rings 190 are attached to the shafts 186 so as to sandwich, from the two sides, the first shaft insertion holes 187 and the second shaft insertion holes 188 in which the shafts 186 are being inserted. In this manner, the coupling portions 182 couple the reflector 132 to the reflector base 138, allowing the reflector 132 to rotate about the shafts 186 relative to the reflector base 138.

The adjustment portion 183 is disposed at a position offset from the second axis of tilt 158. As illustrated, the adjustment portion 183 couples the reflector 132 to the reflector base 138 at a position more backward than the coupling portions 182 in the X-direction. The adjustment portion 183 includes an adjustment screw 91, a spring 192, and an adjustment screw hole portion 193. The adjustment screw hole portion 193 is provided in the reflector base 138. The adjustment screw 91 is inserted into an adjustment screw insertion hole 194 in the reflector 132 in the optical axis direction and attached into a screw hole of the adjustment screw hole portion 193. The spring 192 is disposed between the reflector 132 and the reflector base 138 along the adjustment screw 91 to retain the gap between the reflector 132 and the reflector base 138.

The gap between the reflector 132 and the reflector base 138 in the optical axis direction is adjusted as the adjustment screw 91 is rotated. Since the reflector 132 is coupled to the reflector base 138 with the coupling portions 182, the reflector 132 can be tilted about the second axis of tilt 158 relative to the reflector base 138. Thus, the optical axis of the light-emitting unit 120 can be adjusted in the Z-direction (i.e., the up-down direction of the lamp).

As described thus far, the reflector tilting mechanism 136 that can tilt about two different axes is provided on the light source base 128 of the light-emitting unit 120. Accordingly, the angle of the reflector 132 relative to the laser light source 126 can be adjusted in each of the two axes in a state in which the light-emitting unit 120 is attached to a predetermined location, such as the light-emitting unit supporting member 140. In this manner, the optical axis of the light-emitting unit 120 can be finely adjusted, and the accuracy of the optical axis of the light-emitting unit 120 can be improved.

As described above, the first axis of tilt (i.e., the optical axis 156) and the second axis of tilt 158 correspond to the Z-axis and the Y-axis, respectively, and pass through the light source center 157. In this manner, the center of rotation of the reflector tilting mechanism 136 coincides with the light source center 157. Accordingly, the optical axis of the light-emitting unit 120 can be adjusted while an influence on the light distribution is kept to a minimum.

Furthermore, the positioning pin 164 defines the positioning side surface 170 centered at the optical axis 156 of the laser light source 126. In other words, the center of the positioning pin 164 coincides with the light source center 157. This design makes it possible to omit the dimensional tolerance between the center of the positioning pin 164 and the light source center 157 when considering an accumulation of the dimensional tolerances. This also helps to improve the accuracy of the optical axis.

The positioning pin 164 includes the first positioning end surface 172 located at the first height H1 in the optical axis direction, and the light-exit surface 154 is located at the second height H2 that is higher than the first height H1 in the optical axis direction. In this manner, the height of the leading end surface of the positioning pin 164 in the optical axis direction is lower than the light-exit surface 154 of the laser light source 126. Thus, the upper surface 189 of the engagement portion 184 of the reflector 132 can be disposed at the same height as the light-exit surface 154. Alternatively, the upper surface 189 of the engagement portion 184 of the reflector 132 can be disposed at a position lower than the height of the light-exit surface 154. Accordingly, the engagement portion 184 does not block the light emitted from the light-exit surface 154 toward the reflector 132.

The present invention is not limited to the embodiments described above. Modifications, including various design changes, can be made thereto on the basis of the knowledge of a person skilled in the art, and embodiments with such modifications are also encompassed by the scope of the present invention.

In the embodiments described above, the laser light sources 26 and 126 have a columnar shape, but the light source may have any shape. The laser light sources 26 and 126 may have a prism shape or any other prismoidal shape or may have a flat shape such as a baseplate shape.

In the embodiments described above, the laser light sources 26 and 126 including the laser diodes 46 and 146, respectively, are used as a light source, but this is not a limiting example. The light-emitting units 20 and 120 may include a light source including other semiconductor light-emitting element such as a light-emitting diode (LED).

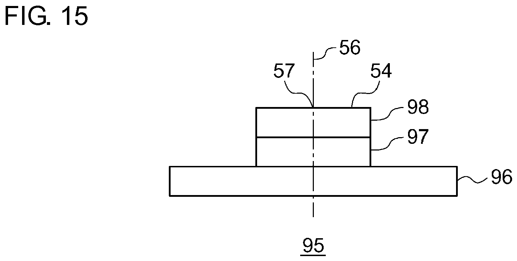

Fig. 15 illustrates an LED light source 95 that can be employed in the light-emitting units 20 and 120. The LED light source 95 includes a substrate 96, an LED chip 97 mounted on the substrate 96, and a fluorescent layer 98 provided on the LED chip 97. One or more blue LEDs, for example, are arrayed in the LED chip 97. An optical wavelength conversion member, such as a transparent sealing member having yellow phosphor dispersed therein or plate-shaped yellow phosphor ceramics, is used as the fluorescent layer 98, for example. In the case of the LED light source 95, an upper surface of the fluorescent layer 98 serves as a light-exit surface 54. An optical axis 56 extends in a direction along which the emission light of the LED light source 95 is most intense. In addition, the optical axis 56 passes through the center of the light-exit surface 54 (i.e., a light source center 57) and is perpendicular to the light-exit surface 54.

In the embodiments described above, the positioning structures 34 and 134 include a cylindrical or columnar positioning pin, but the shape of the positioning pin is not limited thereto. The positioning pin may have a rectangular tubular shape, a prism shape, or any other shape.

The positioning surface of a tubular positioning pin (e.g., the first positioning pin 64, the positioning pin 164) is not limited to the outer peripheral surface of the tubular positioning pin and may be the inner peripheral surface thereof. In this case, the engagement portion of the optical member (e.g., the reflector 32, the reflector base 138) may have an outer peripheral surface that engages with the inner peripheral surface of the tubular positioning pin.

The tubular positioning pin need not be continuous along the entire circumference in the circumferential direction about the optical axis 56 or 156. The tubular positioning pin may have one or more slits extending in the optical axis direction. The tubular positioning pin may be a plurality of projections arrayed to surround the optical axis 56 or 156. The tubular positioning pin or the positioning structure may be a tubular positioning pin or a positioning structure having any shape as long as the tubular positioning pin or the positioning structure can define a positioning surface.

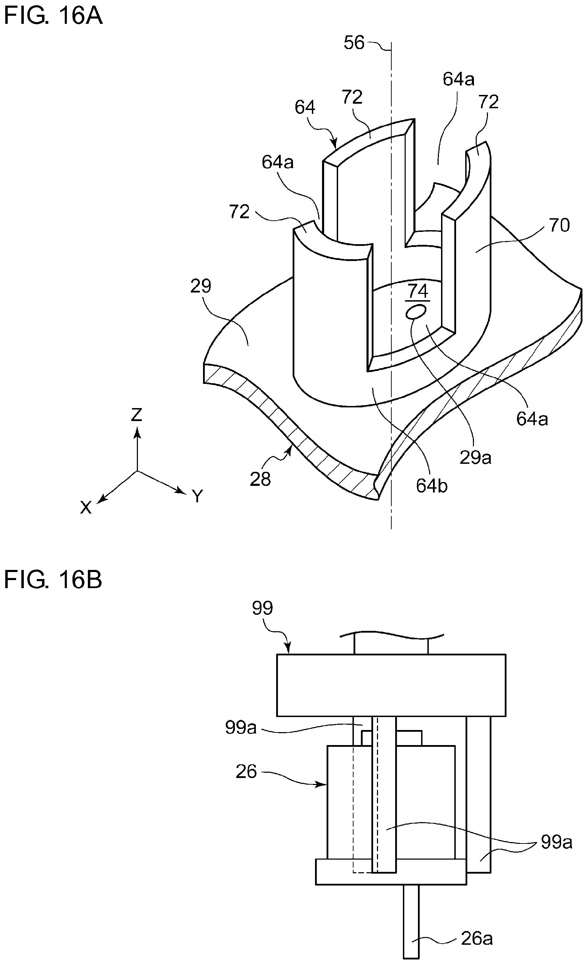

Fig. 16A is a schematic perspective view illustrating a first positioning pin 64 provided with slits, and Fig. 16B illustrates transport of the laser light source 26. To facilitate understanding, the X-axis, the Y-axis, and the Z-axis are illustrated in Fig. 16A.

Similarly to the embodiments described above, the outer peripheral surface of the first positioning pin 64 serves as a first positioning side surface 70, and the first positioning pin 64 is erected on the bottom plate 29 of the light source base 28. The first positioning pin 64 is tubular and has a light source mounting recess portion 74 defined thereinside.

As illustrated in Fig. 16A, three slits 64a are formed in the first positioning pin 64. The slits 64a are provided at an equal interval in the circumferential direction. The three slits 64a split the first positioning pin 64 into three projections arrayed to surround the optical axis 56. As such, a first positioning end surface 72 is also split into three by the slits 64a.

The first positioning pin 64 has an annular base portion 64b provided on the bottom plate 29 of the light source base 28, and the three projections project along the optical axis 56 from the base portion 64b. The first positioning pin 64 need not include the base portion 64b, and the three projections may project from the bottom plate 29 of the light source base 28.

Fig. 16B illustrates how the laser light source 26 is transported by a mounting device 99. The laser light source 26 is transported to the light source base 28 by the mounting device 99 and mounted into the light source mounting recess portion 74 in the first positioning pin 64. The mounting device 99 includes three claw chucks 99a for holding the laser light source 26. The three claw chucks 99a are disposed to correspond to the three slits 64a described above (i.e., the three claw chucks 99a are disposed at an equal angular interval to surround the laser light source 26), and thus the three claw chucks 99a do not make contact with the first positioning pin 64 when the laser light source 26 is mounted into the light source mounting recess portion 74. Upon the laser light source 26 being mounted in the light source mounting recess portion 74, the mounting device 99 releases the claw chucks 99a. In this manner, the mounting device 99 can position the laser light source 26 relative to the light source base 28 in the Z-direction without the claw chucks 99a interfering with the first positioning pin 64.

As illustrated in Fig. 16B, the laser light source 26 includes a feeder terminal 26a provided on a bottom portion thereof. As illustrated in Fig. 16A, the light source base 28 includes an insertion hole 29a into which the feeder terminal 26a of the laser light source 26 is inserted. The insertion hole 29a penetrates the bottom plate 29 of the light source base 28 from the light source mounting recess portion 74 to the back surface of the bottom plate 29. When the laser light source 26 is mounted into the light source mounting recess portion 74, the feeder terminal 26a of the laser light source 26 is inserted into the insertion hole 29a. The feeder terminal 26a of the laser light source 26 is connected to a feeder unit at a back surface side of the bottom plate 29 of the light source base 28. Such an insertion hole 29a may be provided in the light source base 28 similarly in the embodiments described with reference to Fig. 1 to Fig. 15.

In order to transport the laser light source 26 without being tilted, the number of the claw chucks 99a of the mounting device 99 is desirably three or more. The slits 64a are formed in the first positioning pin 64 desirably in the same number as the number of the claw chucks 99a. For example, when the mounting device 99 has four claw chucks 99a, the first positioning pin 64 may have four slits 64a.

The slits 64a may be provided in the positioning pin 164.

The optical member that is positioned relative to the light source by the positioning structure is not limited to the reflector 32. The optical member may be other optical members such as a lens.

In a similar manner, the optical member that is allowed to tilt relative to the light source by the tilting mechanism is not limited to the reflector 132. The optical member may be other optical members such as a lens.

In the embodiments described above, the light-emitting unit 120 includes the light source base 128 serving as a light source supporting member, and the heat sink 130 is provided as a member separate from the light source base 128, but this is not a limiting example. In one embodiment, a light-emitting unit may include a light source supporting member in which a light source base and a heat-dissipating member are integrated.

The features described in relation to the first embodiment may be applied to the second embodiment as well, if applicable. In a similar manner, the features described in relation to the second embodiment may be applied to the first embodiment as well, if applicable. For example, the positioning structure 34 may include the reflector tilting mechanism 136. The optical member positioning structure may include an optical member tilting mechanism configured to allow an optical member to tilt about each of two different axes relative to a light source.

### [DESCRIPTION OF THE REFERENCE NUMERALS]

10 vehicle lamp, 20 light-emitting unit, 24 optical member, 26 laser light source, 28 light source base, 30 heat sink, 32 reflector, 34 positioning structure, 46 laser diode, 54 light-exit surface, 56 optical axis, 57 light source center, 60 reflective surface, 64 first positioning pin, 66 second positioning pin, 70 first positioning side surface, 72 first positioning end surface, 74 light source mounting recess portion, 76 second positioning side surface, 80 second positioning end surface, 84 engagement portion, 86 first positioning hole, 90 second positioning hole, 110 vehicle lamp, 120 light-emitting unit, 124 optical member, 126 laser light source, 128 light source base, 132 reflector, 134 positioning structure, 136 reflector tilting mechanism, 138 reflector base, 146 laser diode, 154 light-exit surface, 156 optical axis, 157 light source center, 158 second axis of tilt, 164 positioning pin, 170 positioning side surface, 172 first positioning end surface, 180 second positioning end surface, 182 coupling portion, 183 adjustment portion, 184 engagement portion, 186 shaft, 191 adjustment screw

### [INDUSTRIAL APPLICABILITY]

The present invention can be used in light-emitting units and vehicle lamps.

## Claims

1. A light-emitting unit (120), comprising:
a light source (126) including a semiconductor light-emitting element (146);
a light source supporting member (128) for supporting the light source (126);
an optical member (132); and
an optical member tilting mechanism (136) provided in the light source supporting member (128), the optical member tilting mechanism (136) allowing the optical member (132) to tilt about each of two different axes (156,158) relative to the light source (126), **characterized in that**
the light source supporting member (128) includes a positioning structure (134) that positions the optical member tilting mechanism (136) relative to the light source (126), and
the positioning structure (134) defines a positioning surface (170, 172) centered at an optical axis (156) of the light source (126).

2. The light-emitting unit (120) according to claim 1, wherein
the optical member tiltingmechanism (136) is configured to allow the optical member (132) to tilt about a first axis of tilt (156) relative to the light source (126) and to allow the optical member (132) to tilt about a second axis of tilt (158) relative to the light source (126),
the first axis of tilt (156) is an optical axis (156) of the light source (126), and
the second axis of tilt (158) is orthogonal to the optical axis (156) and is located at a height of a light-exit surface (154) of the light source (126).

3. The light-emitting unit (120) according to claim 1, wherein
the positioning structure (134) includes a leading end surface (172) located at a first height (H1) in an optical axis direction, and
a light-exit surface (154) of the light source (126) is located at a second height (H2) higher than the first height (H1) in the optical axis direction.

4. The light-emitting unit (120) according to any one of the claims 1-3, wherein
the positioning structure (134) includes a positioning pin (164) provided with a slit (64a).

5. The light-emitting unit (120) according to any one of claims 1 to 4, wherein
the light source supporting member (128) includes
a light source base (128) that supports the light source (126), and
a heat-dissipating member (130) to which the light source base (128) is attached or that is formed integrally with the light source base (128).

6. A vehicle lamp (10), comprising:
the light-emitting unit (20) according to any one of claims 1 to 5.

## Patentansprüche

1. Lichtemittierende Einheit (120), umfassend:
eine Lichtquelle (126) mit einem lichtemittierenden Halbleiterelement (146);
ein Lichtquellen-Tragelement (128) zum Tragen der Lichtquelle (126);
ein optisches Element (132); und
einen Kippmechanismus (136) für ein optisches Element, der in dem Lichtquellen-Tragelement (128) bereitgestellt ist, wobei der Kippmechanismus (136) für das optische Element ermöglicht, das optische Element (132) um jede von zwei verschiedenen Achsen (156, 158) relativ zur Lichtquelle (126) zu kippen, **dadurch gekennzeichnet, dass**
das Lichtquellen-Tragelement (128) eine Positionierungsstruktur (134) aufweist, die den Kippmechanismus (136) für das optische Element relativ zur Lichtquelle (126) positioniert, und
die Positionierungsstruktur (134) eine Positionierungsfläche (170, 172) definiert, die auf einer optischen Achse (156) der Lichtquelle (126) zentriert ist.

2. Lichtemittierende Einheit (120) gemäß Anspruch 1, wobei:
der Kippmechanismus (136) für das optische Element dafür ausgelegt ist zu ermöglichen, dass das optische Element (132) um eine erste Kippachse (156) relativ zu der Lichtquelle (126) kippt und das optische Element (132) um eine zweite Kippachse (158) relativ zu der Lichtquelle (126) kippt,
die erste Kippachse (156) eine optische Achse (156) der Lichtquelle (126) ist, und
die zweite Kippachse (158) orthogonal zur optischen Achse (156) ist und sich in Höhe einer Lichtaustrittsfläche (154) der Lichtquelle (126) befindet.

3. Lichtemittierende Einheit (120) gemäß Anspruch 1, wobei:
die Positionierungsstruktur (134) eine vordere Endfläche (172) aufweist, die in einer ersten Höhe (H1) in der Richtung einer optischen Achse angeordnet ist, und
eine Lichtaustrittsfläche (154) der Lichtquelle (126), die in einer zweiten Höhe (H2), die höher als die erste Höhe (H1) ist, in der Richtung der optischen Achse angeordnet ist.

4. Lichtemittierende Einheit (120) gemäß einem der Ansprüche 1-3, wobei:
die Positionierungsstruktur (134) einen Positionierungsstift (164) aufweist, der mit einem Schlitz (64a) versehen ist.

5. Lichtemittierende Einheit (120) gemäß einem der Ansprüche 1 bis 4, wobei:
das Lichtquellen-Tragelement (128)
eine Lichtquellenbasis (128), die die Lichtquelle (126) trägt, und
ein wärmeableitendes Element (130), an dem die Lichtquellenbasis (128) befestigt ist oder das einstückig mit der Lichtquellenbasis (128) ausgebildet ist, aufweist.

6. Fahrzeuglampe (10), umfassend:
eine lichtemittierende Einheit (20) gemäß einem der Ansprüche 1 bis 5.

## Revendications

1. Unité électroluminescente (120), comprenant :
une source de lumière (126) comportant un élément électroluminescent à semiconducteur (146) ;
un organe de support de source de lumière (128) pour supporter la source de lumière (126) ;
un organe optique (132) ; et
un mécanisme d'inclinaison d'organe optique (136) prévu dans l'organe de support de source de lumière (128), le mécanisme d'inclinaison d'organe optique (136) permettant à l'organe optique (132) de s'incliner autour de chacun des deux axes différents (156, 158) par rapport à la source de lumière (126), **caractérisée en ce que**
l'organe de support de source de lumière (128) comporte une structure de positionnement (134) qui positionne le mécanisme d'inclinaison d'organe optique (136) par rapport à la source de lumière (126), et
la structure de positionnement (134) définit une surface de positionnement (170, 172) centrée sur un axe optique (156) de la source de lumière (126).

2. Unité électroluminescente (120) selon la revendication 1, dans laquelle
le mécanisme d'inclinaison d'organe optique (136) est configuré pour permettre à l'organe optique (132) de s'incliner autour d'un premier axe d'inclinaison (156) par rapport à la source de lumière (126) et pour permettre à l'organe optique (132) de s'incliner autour d'un deuxième axe d'inclinaison (158) par rapport à la source de lumière (126),
le premier axe d'inclinaison (156) est un axe optique (156) de la source de lumière (126), et
le deuxième axe d'inclinaison (158) est orthogonal à l'axe optique (156) et est situé à une hauteur d'une surface de sortie de lumière (154) de la source de lumière (126).

3. Unité électroluminescente (120) selon la revendication 1, dans laquelle
la structure de positionnement (134) comporte une surface d'extrémité avant (172) située à une première hauteur (H1) dans une direction d'axe optique, et
une surface de sortie de lumière (154) de la source de lumière (126) est située à une deuxième hauteur (H2) supérieure à la première hauteur (H1) dans la direction d'axe optique.

4. Unité électroluminescente (120) selon l'une quelconque des revendications 1 à 3, dans laquelle
la structure de positionnement (134) comporte une tige de positionnement (164) munie d'une fente (64a).

5. Unité électroluminescente (120) selon l'une quelconque des revendications 1 à 4, dans laquelle
l'organe de support de source de lumière (128) comporte
une base de source de lumière (128) qui supporte la source de lumière (126), et
un organe de dissipation thermique (130) auquel est fixée la base de source de lumière (128) ou qui est formé d'un seul tenant avec la base de source de lumière (128).

6. Lampe de véhicule (10), comprenant :
l'unité électroluminescente (20) selon l'une quelconque des revendications 1 à 5.
